# EUROPEAN PATENT SPECIFICATION

(11) **EP 1 185 799 B1**
(45) Date of publication and mention of the grant of the patent: **07.12.2011**
(21) Application number: 99923153.3
(22) Date of filing: 17.05.1999
(51) Int. Cl.: F16D 31/00

(54) **ROTATIONAL CONTROL APPARATUS**
DREHBARE STEUEREINRICHTUNG
DISPOSITIF DE COMMANDE DE ROTATION SANS JOINT HOMOCINETIQUE

(43) Date of publication of application: 13.03.2002
(73) Proprietor: Horton Inc., Roseville, Minnesota 55113 (US)
(72) Inventor: VATSAAS, Rick, Eagan, MN 55123 (US)
(74) Representative: Larcher, Dominique
(86) International application number: PCT/US1999/010866
(87) International publication number: WO 2000/070236

(56) References cited:
- EP-A- 0 748 945
- EP-A- 0 900 946
- DE-A- 2 815 474
- GB-A- 2 099 933
- GB-A- 2 101 241
- US-A- 2 942 708
- US-A- 4 262 789
- US-A- 4 355 710
- US-A- 4 589 535
- US-A- 4 657 126

## Description

### BACKGROUND OF THE INVENTION

The present invention pertains to a rotational control apparatus and, more particularly, a splineless rotational control apparatus adapted for use in selectively controlling the transmission of rotational forces between first and second relatively rotatable members, and specifically in the preferred form to a frictional clutching device for driving a fan.

When it is desired to intermittently transmit rotational forces from one rotatable component to another, it is commonplace to interconnect the components with a clutch and then to selectively activate and de-activate the clutch as needed. Known clutch arrangements can be controlled using electrical, mechanical, pneumatic or hydraulic based actuation systems. Each of these actuation systems typically function by applying an axial load on a coupling element, generally constituted by either one of the rotatable components or a separate part, to create some relative axial shifting between the coupling element and one of the rotatable components in order to drivingly interconnect the two rotatable components.

In cases where a separate coupling element is utilized, the coupling element is usually drivingly connected with one of the rotatable components through a spline connection. With this arrangement, the coupling element can be readily shifted in the axial direction while still maintaining a drive connection with the respective rotatable component. The major disadvantage associated with this type of clutch is that the splines represent a high wear item and require expensive machining. Obviously, as the spline connection deteriorates, the entire function of the clutch is adversely affected and maintenance is required. Furthermore, the need for a lubricant, such as grease, is present.

In fluid actuated systems, the coupling element is almost invariably constituted by an annular piston. Typically, the piston will be acted upon by at least one spring which biases the piston towards one of an activated or de-activated position. When the two rotatable components are to be interconnected, fluid pressure acts on a side surface of the piston, opposite to that of the spring, to cause the piston to be axially shifted. Since the axial shifting force generated by the fluid is equal to the pressure of the fluid times the associated surface area of the piston, the surface area of the piston has a direct bearing on the level of force that can be developed. However, clutch pistons of this type typically have small surface areas, especially in the case of annular pistons which are positioned around hubs or the like. Correspondingly, these clutches have relatively low engagement and disengagement forces associated therewith.

Another problem recognized in this art concerns the transmission of loads through bearings. It is often found in the art of rotational control devices that rather high loads, particularly axial loads, are placed on bearing units arranged between relatively rotatable members. This high axial loading often results in fatigue faillure of the bearings, thereby requiring the bearings to be periodically replaced.

Based on these and other recognized problems in the art, there exists the need for a rotational control device which avoids the use of a spline connection, enables a relatively high engagement or disengagement force to be developed and limits the degree of axial loading placed upon bearings therein.

U.S. Patent No. 4,589,535 discloses a coupling element (clutch) that employs splines to hold clutch plates that engage one another under the influence of a piston in order to transmit torque from a driving member to a driven output member. This design suffers from the problems associated with spline connections noted above.

U.S. Patent No. 4,657,126 discloses a two-speed clutch that is operable to either couple a first member or a second member to an input. Both of these coupling arrangements are achieved by the use of splines to transmit the torque from the input to the selected output member, and as such, this design also suffers from the problems associated with spline connections noted above.

### SUMMARY OF THE INVENTION

The present invention solves these and other problems and deficiencies in the art by providing a rotational control apparatus having a fixed support shaft upon which is rotatably mounted a first member through a first bearing unit. At a position axially spaced from the first bearing unit, a first engagement surface is provided for rotation with the first member. A second member has a second engagement surface associated therewith, with the second engagement surface being adapted to be selectivety placed into frictional engagement with the first engagement surface to interconnect the first and second members.

To interconnect the engagement surfaces, a piston is positioned axially between the first and second members. In the most preferred form of the invention, the piston, which is circular or disc-shaped as opposed to being annular, extends radially across and sealing engages an outer annular portion of the first member. With this arrangement, the piston has associated therewith an enlarged surface area which is preferably adapted to be acted upon by a pressurized fluid in order to enable the piston to be shifted relative to the first member. A cap member is sealing mounted to an inner axial portion of the first member such that the cap member, portions of the first member and the piston define a fluid actuation/de-actuation chamber for the rotational control apparatus.

The piston is rotatably supported by a second bearing unit that is interposed between the piston and the second member. Although relative rotation is permitted between the piston and the second member, the piston and second member are interconnected for concurrent axial movement through the second bearing. Therefore, shifting of the piston causes engagement and disengagement of the first and second engagement surfaces. At least one spring is provided to bias the piston to either an engaged or disengaged position, with the spring acting between the piston and a radially extending reaction plate fixed for rotation with the first member. In one preferred form of the invention, the reaction plate defines multiple, annularly spaced and axially extending cavities which receive respective springs that act to bias the piston into an engaged position. In another preferred form of the invention, annular springs are interposed between the reaction plate and the piston to bias the piston to a disengaged position.

In either form of the invention, the piston is not directly drivingly engaged with 25 the first member such that the need for splines in the rotational control apparatus is avoided. In addition, the bearing units are situated such that minimal axial loading is placed thereupon when the first and second members of the rotational control apparatus are engaged. Furthermore, as indicated above, the piston defines an enlarged surface area which can be acted upon by a fluid or other axial force developing mechanism such that large engagement/disengagement forces can be created.

It is thus an object of the present invention to provide an improved rotational control apparatus for use in selectively controlling the transmission of forces between first and second relatively rotatable members.

It is another object of the present invention to provide a rotational control apparatus of the type having a fixed support shaft which rotatably supports the first member through a first bearing unit.

It is still another object of the present invention to provide a rotational control apparatus which is actuated through the use of an axially shifting piston having a large associated piston area so as to enable the development of rather large engagement or disengagement forces.

It is still another object of the present invention to provide a rotational control apparatus wherein fluid pressure can be introduced into a chamber defined by the piston, portions of the first member and a cap member sealingly mounted to the first member in order to axially shift the piston.

It is a further object of the present invention to provide a rotational control apparatus wherein the piston is axially shiftably mounted without the use of any spline connections.

It is a still further object of the present invention to provide a rotational control apparatus wherein the piston is interconnected through a second bearing unit for relative rotational and concurrent axial movement with the second member.

It is a still further object of the present invention to provide a rotational control apparatus which can be spring biased to either an engaged or disengaged position.

It is a still further object of the present invention to provide a rotational control apparatus designed to exert minimal loading on the bearing units in order to increase the useful lives thereof.

These and other objects, features and advantages of the present invention will become more readily apparent from the following detailed description of preferred embodiments of the invention when taken in conjunction with the drawings wherein like reference numerals refer to corresponding parts.

### BRIEF DESCRIPTION OF THE DRAWINGS

Figure 1 is a cross-sectional view of a rotational control apparatus constructed in accordance with a first preferred embodiment of the present invention; and
Figure 2 is a cross-sectional view of a rotational control apparatus constructed in accordance with a second preferred embodiment of the invention.

It should be noted that all the figures are drawn for ease of explanation of the basic teachings of the present invention only; the extensions of the figures with respect to number, position, relationship and dimensions of the parts to form the preferred embodiment will be explained or will be within the skill of the art after the following teachings of the present invention have been read and understood.

Furthermore, when the terms "first", "second", "inner", "outer", "radially", "axially", and similar terms are used herein, its should be understood that these terms have reference only to the structure shown in the drawings as it would appear to a person viewing the drawings and are utilized only to facilitate describing the invention.

### DETAILED DESCRIPTION OF THE PREFERRED EMBODIMENTS

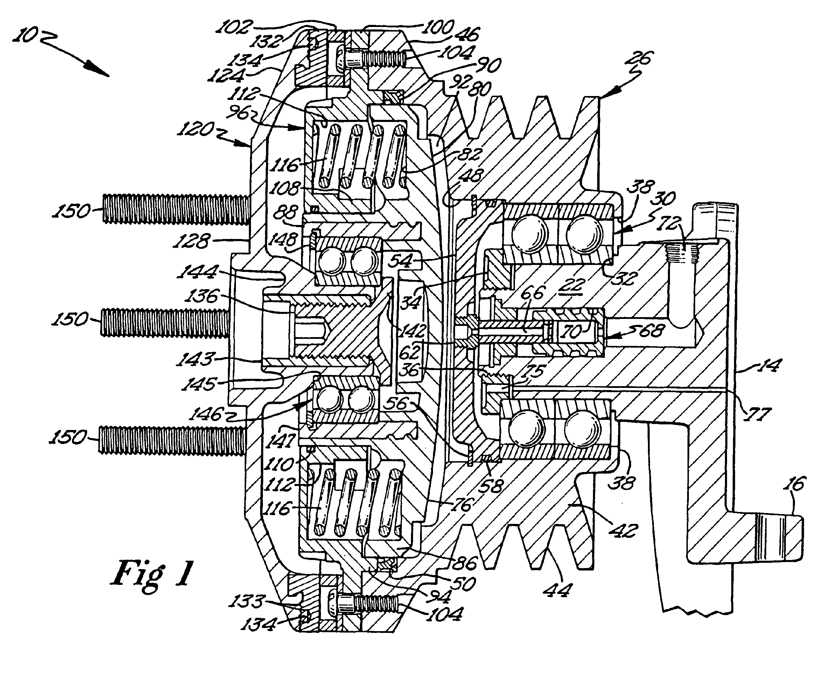

With initial reference to Figure 1, a rotational control apparatus constructed in accordance with a first preferred embodiment according to the teachings of the invention is generally designated 10. In the most preferred form of the invention, rotational control apparatus 10 constitutes a friction clutch which is particularly adapted for use in driving a fan, such as a cooling fan used in an automotive environment. However, as it will become fully evident from reading and understanding the invention as detailed below, various aspects of the invention can be advantageously used outside this specific field, such as in the art of braking devices.

As depicted in this figure, rotational control apparatus 10 includes an integrally formed, generally L-shaped journal bracket 14 that defines a support mount for the overall apparatus. Journal bracket 14 includes a flange portion 16 through which a plurality of bolts (not shown) are adapted to extend for threadably securing journal bracket 14 in a fixed position to supporting structure (not shown), such as an engine block. Journal bracket 14 includes a shaft portion 22 that is adapted to support a sheave 26. In accordance with the preferred form according to the preferred teachings of the invention, sheave 26 constitutes a first or input member of rotational control apparatus 10 and is rotatably supported upon shaft portion 22 by means of a first bearing unit 30. More specifically, first bearing unit 30 includes inner and outer races which are press-fit upon shaft portion 22 and against sheave 26 respectively. The inner race(s) of first bearing unit 30 is axially fixed upon shaft portion 22 by abutting a shoulder 32 of shaft portion 22 at one axial position and, at a spaced axial position, through engagement with a retainer element 34 which is threadably attached to a reduced diametric, inner axial end 36 of shaft portion 22.

Sheave 26 is provided with a shoulder 38 which axially locates sheave 26 relative to first bearing unit 30. In the preferred embodiment shown, shoulder 38 represents an extension of a first or hub portion 42 of sheave 26. First portion 42 defines an outer radial grooved section 44 about which a belt (not shown) is adapted to extend for inputting a rotational driving force to sheave 26. Sheave 26 also includes a second portion 46 which is axially spaced from first portion 42. With this arrangement, sheave 26 has associated therewith an inner radial diametric surface 48 and an outer radial diametric surface 50, both of which are located within the confines of the sheave 26.

In the most preferred form of the invention, rotational control apparatus 10 constitutes a fluid pressure controlled device. In this preferred form, rotational control apparatus 10 incorporates a cap member 54 which extends across inner diametric surface 48. As clearly shown in Figure 1, cap member 54 also abuts the outer race of first bearing unit 30 and is maintained axially by means of a snap ring 56. A seal 58 is interposed between cap member 54 and sheave 26. At the center of cap member 54, a fluid passage defining coupling 62 is threadably secured. The passage of coupling 62 is in fluid communication with a conduit 66 of a rotary joint 68. Rotary joint 68 is mounted within a bore 70 formed in shaft portion 22 of bracket 14. In general, rotary joint 68 takes the form of a cartridge that is known in the art and therefore will not be detailed here. However, it should be noted that conduit 66 is in further fluid communication with a passage 72 formed in shaft portion 22. Therefore, with this arrangement, a supply of pressurized fluid can be forced to selectively flow through cap member 54 through passage 72, rotary joint 68 and coupling 62.

During initial assembly of rotational control apparatus 10, first bearing unit 30 is initially positioned against shoulder 38 within sheave 26. Thereafter, sheave 26 and first bearing unit 30 are slid onto shaft portion 22 of journal bracket 14 until first bearing unit 30 abuts shoulder 32. Next, retainer element 34 is threaded onto the axial end 36 of shaft portion 22 which presses the inner race of first bearing unit 30 against shoulder 32. Rotary joint 68 can actually be installed before or after the assembly of sheave 26 and first bearing unit 30 upon journal bracket 14. With seal 58 and coupling 62 attached to cap member 54, cap member 54 is slid along inner radial diametric surface 48 and pressed against the outer race of first bearing unit 30. Thereafter, snap ring 56 is mounted in an annular groove formed in diametric surface 48 to axially retain cap member 54. With this arrangement, journal bracket 14 can be advantageously formed of one piece to enhance the structural characteristics thereof while still having shaft portion 22 extend well into sheave 26. In the preferred form, the fluid passage of coupling 62 is threaded for receipt of a bolt or the like to allow removal of cap member 54 (after removal of snap ring 56) for dissassembly.

In the most preferred form of the invention, retainer element 34 is formed with a weep hole 75 and shaft portion 22 is provided with a weep passage 77 that extends from the weep hole 75 axially through journal bracket 14. With this preferred construction, if any leakage occurs between coupling 62 and rotary joint 68, the fluid will escape through the weep circuit and not through first bearing unit 30 to extend the useful life of bearing unit 30.

Rotational control apparatus 10 further includes a piston 76 having a disc-shaped portion defined, at least in part, by a first axial side surface 80 that is exposed to the pressurized fluid flowing through coupling 62. Piston 76 also includes a second axial side surface 82 from which project outer and inner axially extending portions 86 and 88. A seal 90 is interposed between outer axially extending portion 86 and surface 50 of second portion 46 of sheave 26 such that a fluid chamber 92 is defined within sheave 26, which is preferably formed of a low porosity metal such as steel or iron and, more specifically, between cap member 54, portions of sheave 26 and first axial side surface 80 of piston 76. As will be detailed further below, piston 76 is adapted to be selectively shifted axially relative to sheave 26 in order to engage and disengage rotational control apparatus 10.

In the preferred form of the invention, seal 90 is fixed to sheave 26. More specifically, an axially extending annular projection 94 of a reaction plate 96 compresses seal 90 against sheave 26. Of course, it should be readily recognized that, while accommodating some axial movement of seal 90, seal 90 could be carried by piston 76 itself and engage surface 50. In any event, piston 76 is slidable along axial surfaces of projection 94, seal 90 and second portion 46 of sheave 26. Seal 90 preferably takes the form of a multi-cup seal and is positioned at an outermost portion of fluid chamber 92 such that viscous fluids, such as grease or other lubricants, will tend to flow radially outwardly during operation of rotational control apparatus 10 and bathe seal 90. Reaction plate 96 includes an outermost circumferential flange portion 100 that is adapted to be axially bolted to second portion 46 of sheave 26. More specifically, a frictional lining 102 that defines a first frictional engagement surface of rotational control apparatus 10 receives button head cap screws 104 that also extend through flange portion 100 and which are threadably received within second portion 46 of sheave 26. Therefore, the tightening of screws 104 secure frictional lining 102 and reaction plate 96 to sheave 26, as well as securely retaining annular seal 90 in a desired position.

Reaction plate 96 includes an inner, axially extending, annular portion 108 which is provided with a dust seal 110 and aids in defining a plurality of annularly spaced cavities 112. In the preferred embodiment, twelve such cavities 112 are equally, annularly spaced in reaction plate 96 and the walls of the cavities 112 define ribs which structurally reinforce reaction plate 96. Each of the cavities 112 is adapted to receive a compression spring 116 which extends between reaction plate 96 and second axial side surface 82 of piston 76. Due to the presence of springs 116, piston 76 is biased towards shaft portion 22, but fluid pressure delivered into fluid chamber 92 through passage 72, rotary joint 68 and fluid passage defining coupling 62 can cause piston 76 to shift relative to sheave 26 against the biasing force of springs 116. During this axial shifting, piston 76 also slides relative to reaction plate 96, with inner axially extending portion 88 of piston 76 being guided along inner axially extending portion 108 of reaction plate 96. In the most preferred form of the invention, this interface between piston 76 and reaction plate 96 is provided with a friction reducing, thermal, spray applied, ceramic/metallic coating which is TEFLON impregnated. Such an arrangement is considered advantageous over the use of a lubricant, e.g. grease, which would tend to work out into the friction surfaces and could affect the engagement/disengagement forces associated with rotational control apparatus 10. This may be of particular concern given the intended field of use of rotational control apparatus 10 and the fact that dust could easily stick to and get into any lubricant used. Also, the adjacent radial surfaces of piston 76 and reactor plate 96 are not machined along a radial plane but have a convolute shape to provide stress relief.

Rotational control apparatus 10 also includes a second, output member 120 having a first, outer radial section 124 which is interconnected with a second, inner radial section 128. First radial section 124 has associated therewith a second frictional lining 132 that is arranged juxtaposed frictional lining 102. In the most preferred form of the invention, second frictional lining 132 is constituted by a disc formed of steel or other hardened material and is placed in an insertion mold when second member 120 is formed. In this fashion, second frictional lining 132 and second member 120 become integral. In the most preferred form of the invention, second frictional lining 132 is preferably reverse L-shaped as shown in Figure 1 which aids in holding the lining 132 in place. Second frictional lining 132 is also preferably formed with various radially concentric teeth 133 to enhance the heat transfer from second frictional lining 132 to second member 120, as well as increasing the adhesion area between the two components. The disc-shaped lining 132 can also be provided with various bores 134 which open on the side of second member 120 in order to enable the material for second member 120 to flow therein during the molding/casting process. Therefore, bores 134 will create pegs to prevent relative rotation between lining 132 and second member 120. Although friction lining 132 is preferably made of steel or iron, second member 120 is preferably formed from aluminum so as to be lightweight and to be easy to fabricate and machine, as well as for inertia, overall weight and reduced wear purposes. For similar reasons, piston 76 and reaction plate 96 are also preferably formed of aluminum. However, it should be appreciated that piston 76, reaction plate 96, and/or second member 120 could be formed as integral one piece castings of other material such as cast iron.

With this arrangement, frictional linings 102 and 132 define first and second frictional engagement surfaces that are adapted to abut one another when rotational control apparatus 10 is engaged. Second member 120 is adapted to be mounted through the use of a threaded stub shaft 136 having a head portion 142. More specifically, threaded stub shaft 136 is constituted by a jack bolt having a torque fitting and is adapted to be threadably received within a mounting hub 144 defined at a central portion of inner radial section 128. Mounting hub 144 is preferably formed integral with a cast-in steel insert 143 which actually is threadably attached to stub shaft 136. Mounting hub 144 is also provided with a shoulder 145 against which is positioned an inner race of a second bearing unit 146. Second bearing unit 146 has an outer race which is press fit against a thermal expansion controlling insert 147 cast integral with piston 76 and abuts piston 76 in one axial direction, with the outer race being retained in its desired position by means of a snap ring 148.

During a subsequent stage of assembly of rotational control apparatus 10, piston 76 is inserted into second portion 46 of sheave 26 and then reaction plate 96, with springs 116 positioned within cavities 112, is secured to sheave 26 by means of screws 104. With stub shaft 136 extending through second bearing unit 146, second bearing unit 146 is press fit within insert 147 and abuts piston 76. Thereafter, snap ring 148 is inserted to axially maintain the outer race of second bearing unit 146. Mainly due to the construction of reaction plate 96, it should be realized that second bearing unit 146 could be attached to piston 76 prior to the insertion of piston 76 within sheave 26 as well. Next, second member 120 is inserted within bearing unit 146. Thereafter, torque is applied to stub shaft 136 to rotate the same and draw second member 120 into second bearing unit 146 until shoulder 145 abuts the inner race of second bearing unit 146. In tightening of threaded stub shaft 136 in mounting hub 144, head portion 142 engages the inner race of second bearing unit 146 such that the inner race is retained between head portion 142 and shoulder 145. Due to this mounting arrangement and the presence of second bearing unit 146, piston 76 and second member 120 are permitted to rotate relative to one another. In addition, since second bearing unit 146 is located at an inner radial location, contaminants and friction lining dust will tend to flow radially outwardly and away from second bearing unit 146 due to centrifugal forces created during operation of rotational control apparatus 10. Also provided on second member 120, at second radial section 128, are a plurality of annularly spaced threaded shafts or studs 150 which are preferably bonded within second member 120. Since rotational control apparatus 10, in the most preferred form of the invention, constitutes a frictional fan clutch, threaded shafts 150 are adapted to mountingly receive a fan blade ring that is to be secured to second member 120.

With this construction, first portion 42 of sheave 26 is adapted to be driven in a rotational manner relative to journal bracket 14. The driving of sheave 26 also causes rotation of reaction plate 96 and first frictional lining 102. In addition, although there is no spline connection between piston 76 and reaction plate 96 or sheave 26, piston 76 will generally be caused to rotate in unison with these components due to the arrangement and mounting of springs 116. However, it should be recognized that there is permitted at least partial relative rotation between piston 76 and both sheave 26 and reaction plate 96 and that second bearing unit 146 accommodates relative rotation between piston 76 and second member 120.

When used as a clutch wherein both sheave 26 and second member 120 are permitted to rotate, springs 116 bias piston 76 into a position which causes engagement between the first and second frictional engagement surfaces defined by frictional linings 102 and 132. However, pressurized fluid can be introduced within fluid chamber 92 to cause axial shifting of piston 76. Due to the interengagement between piston 76 and second member 120 through second bearing unit 146, axial shifting of piston 76 relative to sheave 26 will cause concurrent axial shifting of second member 120. This axial shifting of second member 120 will cause disengagement between frictional linings 102 and 132, thereby disengaging the clutching operation of rotational control apparatus 10.

At this point, it should be noted that first axial side surface 80 of piston 76 is disc-shaped, i.e., non-annular, and has a substantial radial dimension, i.e., a dimension greater than the diameter of first portion 42 of sheave 26. This construction establishes a large piston area which is acted upon by the pressurized fluid introduced into fluid chamber 92. Therefore, this large piston area enables a high disengagement force to be developed within rotational control apparatus 10 for a given fluid pressure, while also allowing a large amount of spring force to cause rapid engagement with reduced slipping and wear.

In the most preferred form of the invention, air is utilized as the fluid pressurized source. However, it should be readily recognized that other fluids could be utilized, including hydraulic fluid. In addition, other types of actuation systems could also be readily incorporated, including mechanical and eddy-current type actuation systems known in the art, without departing from the invention. In the case of an eddy-current actuation system, magnets could simply be provided on reaction plate 96, such as opposite springs 116, to cooperate with a drive ring on second member 120. In any event, it is merely important to note that springs 116 and the fluid or other piston shifting system functions to axially shift piston 76 relative to sheave 26 so as to cause selective disengagement between sheave 26 and second member 120 in this form of the invention. Therefore, if pressure was lost, rotational control apparatus 10 would assume a fail-safe, engagement mode.

When sheave 26 and second member 120 are engaged, the transfer of forces occurs at the outer radial portions of rotational control apparatus 10. More specifically, these forces are directly transferred between sheave 26 and second member 120 through frictional linings 102 and 132. With this arrangement, second bearing unit 146 does not get excessively loaded during operation of rotational control apparatus 10 such that an extended useful life of second bearing unit 146 can be realized.

At this point, it should be also realized that the rotational control apparatus 10 of the present invention could also function as a braking device such as if threaded shafts 150 or other commensurate structure are utilized to secure second member 120 against rotation. However, the fixing of second member 120 through threaded shafts 150 would still need to accommodate the axial shifting thereof in unison with piston 76. With such an arrangement, engagement between frictional linings 102 and 132 would cause braking of the rotating sheave 26. It should be further recognized that sheave 26 and second member 120 could be selectively interconnected through other structure besides the frictional linings 102 and 136, such as through the use of camming teeth or the like, without departing from the spirit of the invention.

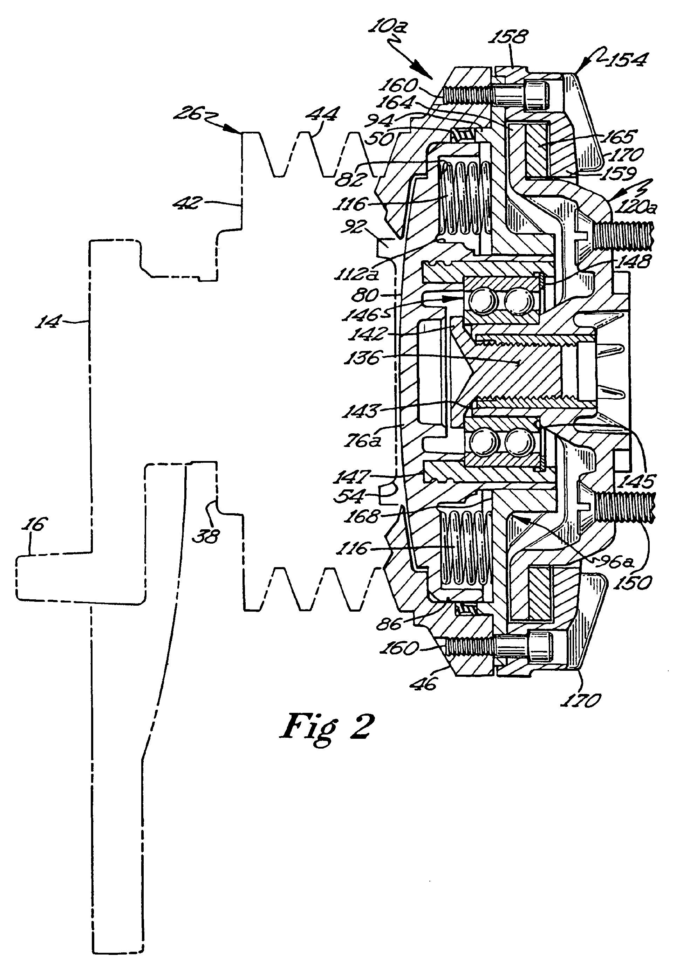

In the embodiment of Figure 1, springs 116 bias piston 76 into a position which causes engagement between frictional linings 102 and 132. Figure 2 represents an alternative embodiment which is constructed substantially identical to that of the first embodiment, but wherein corresponding springs 116 are utilized to bias the rotational control apparatus 10a to a disengaged position. In accordance with this embodiment, a mounting ring 154 is secured to sheave 26 with a corresponding reaction plate 96a therebetween. Mounting ring 154 is formed with a pair of axially spaced and radially extending portions 158 and 159. Portion 158 actually receives bolts 160 for interconnecting sheave 26, reaction plate 96a and mounting ring 154 together. On the other hand, radially extending portion 159 of mounting ring 154 actually defines the first frictional engagement surface for the rotational control apparatus 10a of this embodiment. A corresponding second member 120a is provided with a radial flange 164 that becomes positioned in an undercut area generally defined by portion 159 of mounting ring 154. Radial flange 164 carries a frictional lining 165 that is adapted to engage portion 159 of mounting ring 154 in order to interconnect sheave 26 and second member 120a.

Due to the positioning of radial flange 164 between sheave 26 and portion 159 of mounting ring 154, springs 116 bias piston 76a in a direction which tends to disengage sheave 26 from second member 120a. In order to provide a more compact arrangement, piston 76a is provided with the cavities 112a for the respective springs 116 and reaction plate 96a is provided with a straight bearing surface 168 against which springs 116 act.

Except for the minor differences noted above, the embodiment of Figure 2 is generally commensurate with that of the embodiment of Figure 1. However, due to the presence of mounting ring 154 and the arrangement of radial flange 164, springs 116 actually bias the rotational control apparatus 10a to a disengaged position by causing a concurrent axial shifting of piston 76a and second member 120a. The introduction of pressurized fluid into fluid chamber 92 will cause piston 76a and second member 120a to simultaneously shift, thereby causing sheave 26 to be interconnected with second member 120a. For the sake of completeness, mounting ring 154 can be provided with a plurality of annularly spaced fins 170 for heat dissipation and strength purposes and corresponding fins (not labeled) can be provided in cap member 54 and in the embodiment of Figure 1 such as along the axially sloping, outer portion of second member 120.

Now that the basic teachings of the present invention have been explained, many extensions and variations would be obvious to one having ordinary skill in the art. For example, as indicated above, although the present invention has been explained with respect to a friction clutch, it should be appreciated that the teachings may apply to other types of torque transfer and/or rotational control apparatus such as brakes. Further, although rotational control apparatus 10 and 10a of the most preferred forms include several unique features which are believed to produce synergistic results, such features could be utilized separately or in other combinations.

In general, the structural features of the present invention are provided to extend the useful life of the device. Because of the lack of axial loads placed on the bearing units and the exclusion of high wear items such as splines, rotational control apparatus is substantially maintenance free. When used as a vehicle fan clutch, the rotational control apparatus is expected to last well beyond the full life of the vehicle.

Regardless of its particular use, the invention disclosed herein may be embodied in other specific forms without departing from the spirit or generally characteristics thereof and the embodiments described herein are to be considered in all respects illustrative and not restrictive. Instead, the scope of the invention is to be indicated by the appended claims, rather than by the foregoing description, and all changes which come within the meaning and range of equivalency of the claims are intended to be embraced therein.

## Claims

1. Splineless rotational control apparatus comprising in combination:
- a support mount (14) including a flange portion (16) adapted to receive bolts therethrough for securing the support mount in a fixed position to a support structure, with the support mount including a shaft portion (22) having an outer surface and a first fluid passage (72) therein;
- a first member (26) including a first portion (42) formed as a hub adapted to be interconnected to a driving source and a second portion (46) axially spaced from the first portion (42);
- a second member (120, 120a) having first (124) and second (128) sections, with the second section (128) extending radially inwardly from the first section and being axially spaced from the first portion (42) of the first member (26) a part of the second member being formed as a central mounting hub (144);
- a piston (76, 76a) positioned axially between the first portion (42) of the first member (26) and the second section (128) of the second member (120,120a), with the piston being axially shiftable relative to the first member (26);
- at least one spring (116) interposed between the first member (26) and the piston (76);
- a first bearing unit (30) interposed between the support mount and the first member, with the first member being rotatably supported by the support mount through the first bearing unit, wherein the first bearing unit includes an outer race having an outer diameter dimensioned substantially equal to the inner diametric surface of the hub (42) and an inner race slidably received and retained on the outer surface of the shaft portion (22) and ;
- a second bearing unit (146) interconnecting the piston and the second member for concurrent axial movement relative to the first member (26) while permitting relative rotation between the piston (76,76a) and the second member (120,120a); **characterized by**
- a first frictional engagement surface (102,159) provided at the second portion of the first member for concurrent rotation with the first member;
- a second frictional engagement surface (132,165) provided at the first section of the second member (120,120a) for concurrent rotation with the second member (120,120a);
- and means for axially shifting the piston (76) relative to the first member (26) to cause selective engagement between the first (102,159) and second (132,165) engagement surfaces when the piston (76,76a) is axially shifted to selectively interconnect the first (26) and second members (120,120a).

2. Splineless rotational control apparatus according to claim 1 in which the piston (76,76a) includes a radial portion (80) and an inner axially extending portion (88), with the axially extending portion of the first member (26) slidably supporting the axially extending portion (88) of the piston (76).

3. Splineless rotational control apparatus according to claim 1 or 2 in which the second bearing unit (146) is interposed between the inner axially extending portion (88) of the piston (76) and the mounting hub (144) of the second member (120,120a), with the second bearing unit (146) being attached to and interconnecting each of the piston (76) and the second member (120,120a).

4. Splineless rotationnal apparatus according to anyone of claims 1 to 3 in which the first bearing unit (30) is interposed between the support mount (14) and the first member (26), the first member being rotatably supported by the support mount (14) through the first bearing unit (30).

5. Splineless rotational control apparatus according to anyone of claims 1 to 4 further comprising a cap member (54) sealingly engaging the first portion (42) of the first member (26), with the cap member (54), the piston (76) and the first member (26) defining a fluid chamber (92), said cap member (54) being attached to the first member (26) and arranged between the first bearing unit (30) and the piston (76), with the cap member having a second fluid passage (62) an outer diameter dimensioned substantially equal to the inner diametric surface of the hub (42), with the outer race being positioned against the inner diametric surface of the hub (42) and axially captured within the hub (42) by the cap member (54), with the hub, outer race and cap member (54) being rotatable in unison relative to the shaft portion (22).

6. The splineless rotational control apparatus according to claim 5 further comprising a rotary joint (68) mounted between the cap (54) member and the shaft portion (22), with the rotary joint (68) including a conduit (66) which fluidly interconnects the first (72) and second (62) fluid passages while enabling concurrent rotation of the hub (42), the outer race and the cap member (54) relative to the shaft portion (22);

7. Splineless rotational control apparatus according to anyone of claim 1 to 6 in which the radial portion (80) of the piston (76) is disc-shaped and non-annular.

8. Splineless rotational control apparatus according to anyone of claim 1 to 7 further comprising a jack bolt (136) extending through the bearing unit (146) and being threadably secured to the mounting hub (144) of the second member (120,120a).

9. Splineless rotational control apparatus according to claim 8 wherein the mounting hub (144) includes a central threaded opening for threadable receipt of said jack bolt (136), with the second bearing unit (146) being sandwiched between the jack bolt (136) and the mounting hub (144).

10. Splineless rotational control apparatus according to anyone of claims 2 to 9 in which said support mount is a journal (14) and the first bearing unit (30) is interposed between the shaft portion (22) and the first member (26) for rotatably supporting the first member on the journal (14).

11. Splineless rotational control apparatus according to anyone of claims 1 to 10 wherein the piston (76,76a) sealingly engages the second portion (46) of the first member (26).

12. Splineless rotational control apparatus according to any one of claim 1 to 11 further comprising a reaction plate (96,96a) including an outer radial portion fixed to the second portion of the first member (26) and an inner radial portion.

13. Splineless rotational control apparatus according to claim 12 wherein the piston (76,76a) includes an axial section positioned in slidable relationship with the inner radial portion of the reaction plate (96,96a).

14. Splineless rotational control apparatus according to claim 12 or claim 13 further comprising a plurality of annularly spaced cavities (112) formed in the reaction plate (96), with each of the cavities (112) being adapted to receive a respective spring (116).

15. Splineless rotational control apparatus according to claim 12 or claim 13 wherein said spring (116) is interposed between the reaction plate (96a) and the piston (76a).

16. Splineless rotational apparatus according to anyone of claims 1 to 15 further comprising a retainer element (34) secured to the shaft portion (22) and abutting the inner race of the bearing unit (30) for axially fixing the inner race relative to the support mount.

17. Splineless rotational apparatus according to claim 16 further comprising a weep hole (75) extending through the retainer element (34).

18. Splineless rotational control apparatus according to anyone of claims 1 to 17 wherein the spring (116) moves the piston (76) to cause engagement between the first (102) and second (132) engagement surfaces.

19. Splineless rotational control apparatus according to anyone of claims 1 to 17 wherein the spring (116) moves the piston (76a) to cause disengagement of the second (165) engagement surface from the first (159) engagement surface.

## Patentansprüche

1. Drehbare Steuereinrichtung ohne homokinetisches Gelenk, umfassend in Kombination:
- eine Stützlagerung (14), umfassend ein Flanschstück (16) das dazu ausgelegt ist Bolzen aufzunehmen, um die Stützlagerung in einer festen Position an einer Stützstruktur zu befestigen, wobei die Stützlagerung ein Schaftstück (22) umfasst, das eine Außenfläche und einen ersten Fluiddurchgang (72) darin umfasst;
- ein erstes Element (26), das ein erstes Stück(42) umfasst, das als eine Nabe gebildet ist, dazu ausgelegt, mit einer Antriebsquelle und einem zweiten Stück (46), das axial vom ersten Stück (42) beabstandet ist, verbunden zu sein;
- ein zweites Element (120, 120a), das einen ersten (124) und einen zweiten (128) Abschnitt umfasst, wobei sich der zweite Abschnitt (128) radial vom ersten Abschnitt nach innen erstreckt und axial vom ersten Stück (42) des ersten Elements (26) beabstandet ist, wobei ein Teil des zweiten Elements als eine zentrale Montagenabe (144) gebildet ist;
- einen Kolben (76, 76a), der axial zwischen dem ersten Stück (42) des ersten Elements (26) und dem zweiten Abschnitt (128) des zweiten Elements (120, 120a) angebracht ist, wobei der Kolben bezüglich des ersten Elements (26) axial verschiebbar ist;
- mindestens eine Feder (116), die zwischen dem ersten Element (26) und dem Kolben (76) angebracht ist;
- eine erste Lagereinheit (30), die zwischen der Stützlagerung und dem ersten Element angebracht ist, wobei das erste Element mit Hilfe der Stützlagerung durch die erste Lagereinheit drehbar gelagert ist, wobei die erste Lagereinheit einen Außenring mit einem Außendurchmesser aufweist, der im Wesentlichen gleich der Innendurchmesserfläche der Nabe (42) dimensioniert ist, und einen Innenring, der gleitbar auf der Außenfläche des Schaftstücks (22) aufgenommen und zurückgehalten wird, und
- eine zweite Lagereinheit (146), die den Kolben und das zweite Element zur gleichzeitigen axialen Bewegung bezüglich des ersten Elements (26) verbindet, während sie die relative Rotation zwischen dem Kolben (76, 76a) und dem zweiten Element (120, 120a) ermöglicht; **gekennzeichnet durch**
- eine erste Reibungseingriffsfläche (102, 159), die am zweiten Stück des ersten Elements zur gleichzeitigen Rotation mit dem ersten Element bereitgestellt ist;
- eine zweite Reibungseingriffsfläche (132, 165), die am ersten Abschnitt des zweien Elements (120, 120a) zur gleichzeitigen Rotation mit dem zweiten Element (120, 120a) bereitgestellt ist;
- und Mittel zur axialen Verschiebung des Kolbens (76) bezüglich des ersten Elements (26), um einen selektiven Eingriff zwischen der ersten (102, 159) und der zweiten (132, 165) Eingriffsfläche zu verursachen, wenn der Kolben (76, 76a) axial verschoben wird, um das erste (26) und das zweite Element (120, 120a) selektiv zu verbinden.

2. Drehbare Steuereinrichtung ohne homokinetisches Gelenk nach Anspruch 1, wobei der Kolben (76, 76a) ein radiales Stück (80) und ein inneres, sich axial erstreckendes Stück (88) umfasst, wobei das sich axial erstreckende Stück des ersten Elements (26) das sich axial erstreckende Stück (88) des Kolbens (76) verschiebbar lagert.

3. Drehbare Steuereinrichtung ohne homokinetisches Gelenk nach Anspruch 1 oder 2, wobei die zweite Lagereinheit (146) zwischen dem inneren sich axial erstreckenden Stück (88) des Kolbens (76) und der Montagenabe (144) des zweiten Elements (120, 120a) angebracht ist, wobei die zweite Lagereinheit (146) an jeden Kolben (76) und jedes zweite Element (120, 120a) befestigt ist und diese verbindet.

4. Drehbare Steuereinrichtung ohne homokinetisches Gelenk nach einem der Ansprüche 1 bis 3, wobei die erste Lagereinheit (30) zwischen der Stützlagerung (14) und dem ersten Element (26) angebracht ist, wobei das erste Element drehbar von der Stützlagerung (14) durch die erste Lagereinheit (30) gelagert wird.

5. Drehbare Steuereinrichtung ohne homokinetisches Gelenk nach einem der Ansprüche 1 bis 4, weiter umfassend ein Kappenelement (54), das abdichtend mit dem ersten Stück (42) des ersten Elements (26) in Eingriff steht, wobei das Kappenelement (54), der Kolben (76) und das erste Element (26) eine Fluidkammer (92) definieren, wobei das Kappenelement (54) an das erste Element (26) befestigt ist und zwischen der ersten Lagereinheit (30) und dem Kolben (76) angebracht ist, wobei das Kappenelement einen zweiten Fluiddurchgang (62) aufweist, wobei ein Aussendurchmesser im Wesentlichen gleich der Innendurchmesserfläche der Nabe (42) dimensioniert ist, wobei der Außenring gegen die Innendurchmesserfläche der Nabe (42) angeordnet und innerhalb der Nabe (42) durch das Kappenelement (54) axial festgehalten ist, wobei die Nabe, der Außenring und das Kappenelement (54) übereinstimmend bezüglich des Schaftstücks (22) drehbar sind.

6. Drehbare Steuereinrichtung ohne homokinetisches Gelenk nach Anspruch 5, weiter umfassend eine drehbare Verbindung (68), die zwischen dem Kappenelement (54) und dem Schaftstück (22) befestigt ist, wobei die drehbare Verbindung (68) einen Kanal (66) umfasst, der durch das Fluid den ersten (72) und zweiten (62) Fluiddurchgang verbindet, während er die gleichzeitige Drehung der Nabe (42), des Außenrings und des Kappenelements (54) bezüglich des Schaftstücks (22) ermöglicht;

7. Drehbare Steuereinrichtung ohne homokinetisches Gelenk nach einem der Ansprüche 1 bis 6, wobei das radiale Stück (80) des Kolbens (76) scheibenförmig und nicht kreisförmig ist.

8. Drehbare Steuereinrichtung ohne homokinetisches Gelenk nach einem der Ansprüche 1 bis 7, weiter umfassend einen Positionierbolzen (136), der sich durch die Lagereinheit (146) erstreckt und im Gewindeeingriff an die Montagenabe (144) des zweiten Elements (120, 120a) befestigt ist.

9. Drehbare Steuereinrichtung ohne homokinetisches Gelenk nach Anspruch 8, wobei die Montagenabe (144) eine zentrale Gewindeöffnung umfasst, um den Positionierbolzen (136) im Gewindeingriff aufzunehmen, wobei die zweite Lagereinheit (146) zwischen dem Positionierbolzen (136) und der Montagenabe (144) eingeschoben ist.

10. Drehbare Steuereinrichtung ohne homokinetisches Gelenk nach einem der Ansprüche 2 bis 9, wobei die Stützlagerung ein Zapfen (14) ist und die erste Lagereinheit (30) zwischen dem Schaftstück (22) und dem ersten Element (26) angebracht ist, um das erste Element drehbar auf dem Zapfen (14) zu lagern.

11. Drehbare Steuereinrichtung ohne homokinetisches Gelenk nach einem der Ansprüche 1 bis 10, wobei der Kolben (76, 76a) abdichtend mit dem zweiten Stück (46) des ersten Elements (26) in Eingriff steht.

12. Drehbare Steuereinrichtung ohne homokinetisches Gelenk nach einem der Ansprüche 1 bis 11, weiter umfassend eine Reaktionsplatte (96, 96a), die ein äußeres radiales Stück umfasst, das an das zweite Stück des ersten Elements (26) befestigt ist, und ein inneres radiales Stück.

13. Drehbare Steuereinrichtung ohne homokinetisches Gelenk nach Anspruch 12, wobei der Kolben (76, 76a) einen axialen Abschnitt umfasst, der in verschiebbarer Beziehung zum inneren radialen Stück der Reaktionsplatte (96, 96a) positioniert ist.

14. Drehbare Steuereinrichtung ohne homokinetisches Gelenk nach Anspruch 12 oder Anspruch 13, weiter umfassend eine Vielzahl von ringförmig beabstandeten Hohlräumen (112), die in der Reaktionsplatte (96) gebildet sind, wobei jeder der Hohlräume (112) ausgelegt ist, um eine entsprechende Feder (116) aufzunehmen.

15. Drehbare Steuereinrichtung ohne homokinetisches Gelenk nach Anspruch 12 oder Anspruch 13, wobei die Feder (116) zwischen der Reaktionsplatte (96a) und dem Kolben (76a) angebracht ist.

16. Drehbare Steuereinrichtung ohne homokinetisches Gelenk nach einem der Ansprüche 1 bis 15, weiter umfassend ein Rückhalteelement (34), das an das Schaftstück (22) befestigt ist und an den Innenring der Lagereinheit (30) anstößt, um den Innenring bezüglich der Stützlagerung axial zu befestigen.

17. Drehbare Steuereinrichtung ohne homokinetisches Gelenk nach Anspruch 16, weiter umfassend ein Entwässerungsloch (75), das sich durch das Rückhaltelement (34) erstreckt.

18. Drehbare Steuereinrichtung ohne homokinetisches Gelenk nach einem der Ansprüche 1 bis 17, wobei die Feder (116) den Kolben (76) bewegt, um einen Eingriff zwischen der ersten (102) und der zweiten (132) Eingriffsfläche zu verursachen.

19. Drehbare Steuereinrichtung ohne homokinetisches Gelenk nach einem der Ansprüche 1 bis 17, wobei die Feder (116) den Kolben (76a) bewegt, um eine Lösung des Eingriffs der zweiten (165) Eingriffsfläche von der ersten (159) Eingriffsfläche zu verursachen.

## Revendications

1. Appareil de commande de rotation sans cannelure comprenant en association :
- un bâti de support (14) qui comprend une partie bride (16) adaptée pour recevoir des boulons à travers pour fixer le bâti de support dans une position fixe sur une structure de support, le bâti de support comprenant une partie arbre (22) qui présente une surface extérieure et un premier passage de fluide (72) à l'intérieur ;
- un premier élément (26) qui comprend une première partie (42) formée sous la forme d'un moyeu adapté pour être interconnecté à une source d'entraînement et une seconde partie (46) espacée de manière axiale de la première partie (42) ;
- un second élément (120, 120a) qui présente des première (124) et seconde (128) sections, la seconde section (128) s'étendant de manière radiale vers l'intérieur à partir de la première section et étant espacée de manière axiale à partir de la première partie (42) du premier élément (26), une partie du second élément étant formée sous la forme d'un moyeu de support central (144) ;
- un piston (76, 76a) positionné de manière axiale entre la première partie (42) du premier élément (26) et la seconde section (128) du second élément (120, 120a), le piston pouvant être déplacé de manière axiale par rapport au premier élément (26) ;
- au moins un ressort (116) interposé entre le premier élément (26) et le piston (76) ;
- une première unité de roulement (30) interposée entre le bâti de support et le premier élément, le premier élément étant supporté en rotation par le bâti de support à travers la première unité de roulement, la première unité de roulement comprenant un chemin de roulement extérieur qui présente un diamètre extérieur de dimension sensiblement égale à la surface diamétrale intérieure du moyeu (42) et un chemin de roulement intérieur reçu de façon coulissante et retenu sur la surface extérieure de la partie arbre (22) ; et
- une seconde unité de roulement (146) qui interconnecte le piston et le second élément pour un déplacement axial simultané par rapport au premier élément (26) tout en permettant une rotation relative entre le piston (76, 76a) et le second élément (120, 120a) ;
**caractérisé par**
- une première surface de mise en prise par friction (102, 159) disposée au niveau de la seconde partie du premier élément pour une rotation simultanée avec le premier élément ;
- une seconde surface de mise en prise par friction (132, 165) disposée au niveau de la première section du second élément (120, 120a) pour une rotation simultanée avec le second élément (120, 120a) ;
- et des moyens destinés à déplacer de manière axiale le piston (76) par rapport au premier élément (26) pour provoquer une mise en prise sélective entre les première (102, 159) et seconde (132, 165) surfaces de mise en prise lorsque le piston (76, 76a) est déplacé de manière axiale pour interconnecter sélectivement les premier (26) et second (120, 120a) éléments.

2. Appareil de commande de rotation sans cannelure selon la revendication 1, dans lequel le piston (76, 76a) comprend une partie radiale (80) et une partie intérieure qui s'étend de manière axiale (88), la partie qui s'étend de manière axiale du premier élément (26) supportant de façon coulissante la partie qui s'étend de manière axiale (88) du piston (76).

3. Appareil de commande de rotation sans cannelure selon la revendication 1 ou 2, dans lequel la seconde unité de roulement (146) est interposée entre la partie intérieure qui s'étend de manière axiale (88) du piston (76) et le moyeu de support (144) du second élément (120, 120a), la seconde unité de roulement (146) étant fixée au piston (76) et au second élément (120, 120a) et les interconnectant.

4. Appareil de commande de rotation sans cannelure selon l'une quelconque des revendications 1 à 3, dans lequel la première unité de roulement (30) est interposée entre le bâti de support (14) et le premier élément (26), le premier élément étant supporté en rotation par le bâti de support (14) à travers la première unité de roulement (30).

5. Appareil de commande de rotation sans cannelure selon l'une quelconque des revendications 1 à 4, comprenant en outre un élément de coiffe coiffe(54) qui vient en prise de manière étanche avec la première partie (42) du premier élément (26), l'élément de coiffe (54), le piston (76) et le premier élément (26) définissant une chambre de fluide (92), ledit élément de coiffe (54) étant fixé au premier élément (26) et étant agencé entre la première unité de roulement (30) et le piston (76), l'élément de coiffe présentant un second passage de fluide (62) avec un diamètre extérieur de dimension sensiblement égale à la surface diamétrale intérieure du moyeu (42), le chemin de roulement extérieur étant positionné contre la surface diamétrale intérieure du moyeu (42) et capturé de manière axiale à l'intérieur du moyeu (42) par l'élément de coiffe (54), le moyeu, le chemin de roulement extérieur et l'élément de coiffe (54) pouvant tourner à l'unisson par rapport à la partie arbre (22).

6. Appareil de commande de rotation sans cannelure selon la revendication 5, comprenant en outre un joint rotatif (68) monté entre l'élément de coiffe (54) et la partie arbre (22), le joint rotatif (68) comprenant un conduit (66) qui interconnecte de manière fluidique les premier (72) et second (62) passages de fluide tout en permettant une rotation simultanée du moyeu (42), du chemin de roulement extérieur et de l'élément de coiffe (54) par rapport à la partie arbre (22).

7. Appareil de commande de rotation sans cannelure selon l'une quelconque des revendications 1 à 6, dans lequel la partie radiale (80) du piston (76) présente une forme de disque et est non annulaire.

8. Appareil de commande de rotation sans cannelure selon l'une quelconque des revendications 1 à 7, comprenant en outre un boulon de dégagement (136) qui s'étend à travers l'unité de roulement (146) et qui est fixé par filetage sur le moyeu de support (144) du second élément (120, 120a).

9. Appareil de commande de rotation sans cannelure selon la revendication 8, dans lequel le moyeu de support (144) comprend une ouverture filetée centrale destinée à recevoir par filetage ledit boulon de dégagement (136), la seconde unité de roulement (146) étant prise en sandwich entre le boulon de dégagement (136) et le moyeu de support (144).

10. Appareil de commande de rotation sans cannelure selon l'une quelconque des revendications 2 à 9, dans lequel ledit bâti de support est un tourillon (14) et la première unité de roulement (30) est interposée entre la partie arbre (22) et le premier élément (26) pour supporter en rotation le premier élément sur le tourillon (14).

11. Appareil de commande de rotation sans cannelure selon l'une quelconque des revendications 1 à 10, dans lequel le piston (76, 76a) vient en prise de manière étanche avec la seconde partie (46) du premier élément (26).

12. Appareil de commande de rotation sans cannelure selon l'une quelconque des revendications 1 à 11, comprenant en outre une plaque de réaction (96, 96a) qui comprend une partie radiale extérieure fixée à la seconde partie du premier élément (26) et une partie radiale intérieure.

13. Appareil de commande de rotation sans cannelure selon la revendication 12, dans lequel le piston (76, 76a) comprend une section axiale positionnée dans une relation de coulissement avec la partie radiale intérieure de la plaque de réaction (96, 96a).

14. Appareil de commande de rotation sans cannelure selon la revendication 12 ou la revendication 13, comprenant en outre une pluralité de cavités espacées de manière annulaire (112) formées dans la plaque de réaction (96), chacune des cavités (112) étant adaptée pour recevoir un ressort respectif (116).

15. Appareil de commande de rotation sans cannelure selon la revendication 12 ou la revendication 13, dans lequel ledit ressort (116) est interposé entre la plaque de réaction (96a) et le piston (76a).

16. Appareil de commande de rotation sans cannelure selon l'une quelconque des revendications 1 à 15, comprenant en outre un élément de rétention (34) fixé sur la partie arbre (22) et venant en butée contre le chemin de roulement intérieur de l'unité de roulement (30) destiné à fixer de manière axiale le chemin de roulement intérieur par rapport au bâti de support.

17. Appareil de commande de rotation sans cannelure selon la revendication 16, comprenant en outre un trou d'écoulement (75) qui s'étend à travers l'élément de rétention (34).

18. Appareil de commande de rotation sans cannelure selon l'une quelconque des revendications 1 à 17, dans lequel le ressort (116) déplace le piston (76) pour provoquer une mise en prise entre les première (102) et seconde (132) surfaces de mise en prise.

19. Appareil de commande de rotation sans cannelure selon l'une quelconque des revendications 1 à 17, dans lequel le ressort (116) déplace le piston (76a) pour provoquer un dégagement de la seconde surface de mise en prise (165) de la première surface de mise en prise (159).
